(19) Europäisches Patentamt
European Patent Office
Office européen des brevets

(11) Publication number: **0 061 468**
**B1**

(12) **EUROPEAN PATENT SPECIFICATION**

(45) Date of publication of patent specification: **14.01.87**

(51) Int. Cl.$^4$: **C 22 B 11/04,** C 22 B 11/06, C 22 B 11/12

(21) Application number: **81902616.2**

(22) Date of filing: **18.09.81**

(86) International application number: **PCT/AU81/00136**

(87) International publication number: **WO 82/01195 15.04.82 Gazette 82/10**

(54) **RECOVERY OF SILVER FROM ORES AND CONCENTRATES.**

(30) Priority: **29.09.80 AU 5799/80**

(43) Date of publication of application: **06.10.82 Bulletin 82/40**

(45) Publication of the grant of the patent: **14.01.87 Bulletin 87/03**

(84) Designated Contracting States: **DE FR GB SE**

(56) References cited:
**AU-D-5 125 773**
**BE-A- 413 414**
**DE-A-2 807 266**
**FR-A-2 073 803**
**GB-A- 447 626**
**US-A-3 998 628**
**US-A-4 101 315**
**US-A-4 113 471**

(73) Proprietor: **DEXTEC METALLURGICAL PTY.LTD.**
**124 Walker Street**
**North Sydney New South Wales 2060 (AU)**

(72) Inventor: **EVERETT, Peter Kenneth**
**63 Victoria Avenue**
**Chatswood N.S.W. 2067 (AU)**

(74) Representative: **Rowe, Eric Nielsen et al**
**Edward Evans & Co. Chancery House 53-64**
**Chancery Lane**
**London WC2A 1SD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 061 468 B1**

**Description**

Field of the invention

Background of the invention

This invention relates to a hydrometallurgical method of recovering silver from ores and concentrates.

Silver and gold are produced in major quantities as by-products from the smelting of ores and concentrates to produce metals such as copper and lead. In general these smelting methods are not used to treat ores containing small amounts of silver without appreciable quantities of copper and lead etc. which are normally required to make the process economic.

Typically low grade silver ores are treated by flotation and cyanidation. However this can result in low recoveries due to the variety of mineralisation which may be present. An example of this type of mineralisation is the very large mainly low grade silver deposits near Barstow in California, U.S.A. Using conventional techniques only approximately 50% recovery of the contained silver could be achieved from most samples.

In handling very large tonnages of mainly low grade ore, the processing costs are extremely important as even such steps as heating the ore, or use of reagents, pressure, or specialised equipment, can quickly render a process uneconomic.

Description of the prior art

In U.S. Patent 4,131,454 (Piret et al 1978) there is described a method of selectively separating Au and Ag from solution using activated carbon and iodide from chloride solutions. Iodide can be expensive, and the formation of silver iodide leads to the incorporation of further processing steps to produce metallic silver.

In U.S. Patent 4,127,639 (Piret et al 1978) there is described the selective separation of lead and silver from chloride solutions using sulphide e.g. $H_2S$. As is the case with U.S. Patent 4,134,454 further processing steps are necessary to convert the silver sulphide to metal.

In U.S. Patent 4,124,379 (Piret et al 1978) there is described a method of precipitating silver as an amalgam. Again further processing is necessary to finalize the recovery of silver.

In U.S. Patent 4,113,471 (Langhurst et al 1978) there is described the dissolution of silver in chloride solution at pressures of 200—600 pounds per square inch, and temperatures between 125°C and 225°C. This process consequently requires use of expensive equipment and close control of operating parameters.

In U.S. Patent 4,110,109 (Golben 1978) there are described methods of improving the precipitation of silver on steel wool by inhibiting a side reaction. This side reaction consists of a hydrogen ion attack on the steel wool.

In U.S. Patent 4,035,181 (Fisch 1977) there are described further methods of reducing hydrogen ion attack on steel wool during silver precipitation.

In U.S. Patent 3,744,995 (Mackay 1973) there is described an apparatus for cementation of silver from photographic solutions onto a woven mesh screen. The apparatus suffers from being expensive which, as will be appreciated from the preceding comments, affects the viability of a process.

In U.S. Patent 3,369,801 (Hartman 1968) there is described another relatively expensive apparatus for the use of material, such as steel wool, for cementation of silver from photographic solutions.

In U.S. Patent 219,961 (Lyte 1879) there is described the dissolution of metals in chloride solutions and the precipitation of silver on lead which is stated to be "far superior to iron, copper or any other metals, the employment of which may have been proposed for collecting silver from its solutions".

FR—A—2073803 discloses a process for recovering Pb and Ag from Pb/Ag—containing residues obtained from the electrolytic production of Zn. The residues are leached by an acidified chlorine-ion saturated solution which contains oxidants for oxidising sulphides present in the solution. The silver is removed from the solution by contacting with Pb, but again a separate step has to be carried out to separate the lead and silver. This process cannot be used to separate gold.

The object of this invention is to provide a low cost process which results in very high recoveries of high grade silver using simple inexpensive equipment whilst avoiding the formations of dangerous pollutants. The conditions of the process can be adjusted to also recover gold.

The invention

The process of this invention overcomes the disadvantages of the above processes and provides a low cost method of dissolving silver from a variety of minerals, in a low cost electrolyte followed by a simple inexpensive recovery procedure to produce a high grade silver product. The method avoids the build up of foreign ions in solution.

Accordingly there is provided a process for the recovery of silver from a silver bearing ore or concentrate, comprising forming a mixture of ore or concentrate and an electrolyte containing chloride ions, introducing oxygen-bearing gas into the mixture, and maintaining the mixture at a temperature up to the boiling point of the electrolyte, characterised in that the electrolyte is an acid electrolyte, that an oxidizing agent is added to the mixture containing, as such or as an effect of said addition, chloride ion in excess of that required for stoichiometric formation of silver chloride whereby the silver is taken into solution, and in that the silver is precipitated from the solution by contacting same with a metal having a potential above that of silver in the electrochemical series.

The invention may be characterised in that said oxidizing agent is air.

Alternatively, this oxidizing agent may be chlorine or hypochlorite ion.

Said metal may be metallic iron or steel.

Precipitation may be carried out in a column containing a plurality of elongated iron or steel members.

Said members may be disposed generally parallel to each other.

Said members may be orientated in a vertical direction.

Said members may be a packing of waste steel from lathe or other operations with a void size of greater than 5 mm.

The dissolution of the silver may be carried out in a contacting system and at least a part of the resultant silver contained in solution may be precipitated in a separate vessel.

The contacting system is a counter-current solution.

The solution free from silver resulting from precipitation may be recycled to said counter-current contact solution.

A common method of separation of ionic silver from solution is precipitation as a chloride $Ag^+ + Cl^- \rightarrow AgCl$. The silver chloride, however, is soluble in excess chloride with the formation of a strong Ag/Cl complex. With the present invention it is possible to quickly and efficiently extract silver from many ores and concentrates at low temperature, (e.g. 20—30°C) and low acid conditions using a high strength chloride solution to promote the formation of this complex. In addition the silver recovery from solution using the method stated does not result in a build up of foreign ions in solution, which would normally require periodic replacement of the solution. The strong complex formed by the silver in the strong chloride solution is believed to assist in the oxidation of silver minerals by lowering the oxidation potential required.

The silver minerals treated by this process may be classified as those not requiring oxidation, those requiring mild oxidising agent, and those requiring a strong oxidant. Since other oxidisable material may be present with the silver mineral, it may be important to use the lowest cost oxidising agent possible. The silver is recovered from solution by methods such as cementation on a metal above it in the electromotive series. If desired, the silver may be leached (e.g. at a pH of less than 4, preferably 2.5) and the silver removed from solution.

Preferred aspects of the invention

A preferred method for recovery of the silver from solution is by cementation on iron or steel particles. During the precipitation stage iron is liberated into the solution according to:

$$2Ag^+ + Fe^\circ \rightarrow Fe^{++} + 2Ag^\circ \qquad (1)$$

Typically the leach stage is conducted at a pH above 2 and preferably above 3, and when electrolyte from the mineral recovery stage is reused in the leach, the iron is precipitated as hydrated ferric oxide or other oxide forms. If air is used as the oxidant, the iron may precipitate according to:

$$2Fe^{++} + 2H_2O + \tfrac{1}{2}O_2 \rightarrow Fe_2O_3 + 4H^+ \qquad (2)$$

or

$$2Fe^{++} + \tfrac{1}{2}O_2 + 3H_2O \rightarrow 2FeOOH + 4H^+$$

If silver is being leached according to:

$$4Ag + O_2 + 4H^+Cl^- \rightarrow 4Ag^+Cl^- + 2H_2O \qquad (3)$$

the hydrogen ions are sonsumed and there is no build up in the electrolyte which be expensive, requiring periodic replacement or treatment of the electrolyte. The overall reaction is the sum of the equations (1), (2) and (3) which when balanced give

$$2Fe + 1.50_2 \rightarrow Fe_2O_3$$

i.e. silver is leached and precipitated (as is iron) and the electrolyte is continuously replenished. To facilitate the air oxidation and dissolution of some silver ores, the use of an ionic copper catalyst has been found advantageous. This element often accompanies silver mineralisation or is readily available.

The following examples show the dissolution of some silver minerals in concentrated chloride solution, under varying oxidising conditions.

Example 1

An electrolyte (700 mls) containing 200 gpl of sodium chloride was slurried with 70 g of oxidised silver ore from the Barstow deposit containing 120 ppm silver. The slurry was aerated at pH 3.5 for 2 hours at 30°C. The residue contained 8 ppm silver indicating a recovery of greater than 90%.

Example 2

A more resistant silver ore containing 550 ppm silver was slurried with an electrolyte containing 250 gpl of sodium chloride. The slurry was aerated at pH 3.5 for 2 hours at 30°C. The residue contained 250 ppm silver indicating a 55% recovery.

Example 3

The test of example 2 was repeated with 200 ppm of ionic copper in the solution. The residue contained 6 ppm silver indicating a 99% recovery.

Example 4

A feed material of 85 ppm silver was aerated in sodium chloride (25%) in the presence of ionic copper at a pH of 3.5 for 4 hours at 30°C. The residue contained 30 ppm silver. This material was then leached in 25% sodium chloride solution at pH 3.5 with the addition of chlorine gas sufficient to maintain a positive starch iodide test. The residue contained 2 ppm silver indicating an overall 97% recovery. The aeration step is carried out before the chlorine step to prevent wastage of chlorine on readily oxidised minerals.

Example 5

The following results illustrate the precipitation of silver from a chloride solution using finely divided iron.

| | | |
|---|---|---|
| Temperature | : | Room approximately 18°C |
| Weight iron | : | 0.2 g |
| Electrolyte | : | 700 mls of 110 ppm silver in 20% NaCl |
| pH | : | 2.5 |

| Time (Hrs.) | ppm Ag. | ppm Fe. |
|---|---|---|
| 0 | 110 | 3 |
| 0.25 | 110 | 19 |
| 0.5 | 80 | 29 |
| 0.75 | 50 | 38 |
| 1.0 | 26 | 44 |
| 1.5 | 5 | — |
| 2.0 | Less than 1 | 60 |

To achieve a rapid precipitation of silver from solution, a large excess of iron in the form of parallel vertical steel rods 1 mm in diameter was placed in a column. A solution of 20% sodium chloride containing 100 ppm silver was passed down the column and the silver precipitated as a sponge on the surface of the iron and fell to the bottom of the column. The sponge was analysed and shown to have a ratio of silver to iron of 75 to 1.

Brief description of the drawing

The drawing shows a flowsheet for the process.

Concentrate or ore (1) is mixed countercurrently in vessel 10 with a strong chloride solution (2) and aerated with or without the presence of ionic copper as catalyst. The solids (3) are separated from solution (4). Solids 3 are removed for subsequent leaching (8, 9) before being removed as spent solids 12. The solution is passed to a column (5) packed with vertical steel or iron rods or other packing (not shown) which would allow easy passage of the silver powder to the bottom of the column. The solution (4) passes down the column (5) and silver precipitates on the surface of the packing elements and falls to the bottom. The precipitated silver from the bottom (6) of the column (5) may be removed by filtration or by other suitable means. The resultant high grade silver product 11 (95%+ in contrast to the prior art references) may be further up graded by simple methods. When iron or steel packing elements are used iron is liberated during the silver precipitation. However contaminated solution (7) is subjected to said subsequent leaches (8, 9) where the iron is precipitated leaving uncontaminated solution (2). In a continuous counter-current contacting operation it may be desirable to maintain in the last thickener or reactor a slight excess of chlorine gas to maintain a positive starch iodide test, so that any oxidisable material which is resistant to the air oxidation in the earlier stages may be leached.

**Claims**

1. A process for the recovery of silver from a silver bearing ore or concentrate, comprising forming a mixture of ore or concentrate and an electrolyte containing chloride ions, introducing oxygen-bearing gas into the mixture, and maintaining the mixture at a temperature up to the boiling point of the electrolyte, characterised in that the electrolyte is an acid electrolyte, that an oxidizing agent is added to the mixture containing, as such or as an effect of said addition, chloride ion in excess of that required for stoichiometric formation of silver chloride whereby the silver is taken into solution, and in that the silver is precipitated from the solution by contacting same with a metal having a potential above that of silver in the electrochemical series.

2. A process according to claim 1, characterised in that said mixture additionally contains ionic copper.

3. A process according to either of claims 1 or 2, characterised in that said oxidizing agent is air.

4. A process according to either of claim 1 or 2, characterised in that said oxidizing agent is chlorine or hypochlorite ion.

5. A process according to any preceding claim, characterised in that said metal is metallic iron or steel.

6. A process according to any one of claims 1 to 5, characterised in that precipitation is carried out in a column containing a plurality of elongated iron or steel members.

7. A process according to claim 6, characterised in that said members are disposed generally parallel to each other.

8. A process according to either claim 6 or claim 7, characterised in that said members are orientated in a vertical direction.

9. A process according to claim 7, characterised in that said members are a packing of waste steel from lathe or other operations with a void size of greater than 5 mm.

10. A process according to claim 1, characterised in that the dissolution of the silver is carried out in a contacting system and in that at least part of the resultant silver contained in solution is precipitated in a separate vessel.

11. A process according to claim 10, characterised in that the contacting system is a counter-current system.

12. A process according to claim 10 or claim 11, characterised in that the solution free from silver resulting from precipitation is recycled to said counter-current contact solution.

**Patentansprüche**

1. Verfahren zur Gewinnung von Silber aus einem silberhaltigen Erz oder Konzentrat, bei dem

eine Mischung aus dem Erz oder Kònzentrat und einem Chlorid-Ionen enthaltenden Elektrolyt hergestellt wird, ein Sauerstoff enthaltendes Gas in die Mischung eingeleitet wird und die Mischung auf einer bis zum Siedepunkt des Elektrolyten reichenden Temperatur gehalten wird, dadurch gekennzeichnet, daß der Elektrolyt ein Säure-Elektrolyt ist, daß der Mischung ein Oxidierungsmittel zugesetzt wird, das Chlorid-Ionen im Überschuß gegenüber der Menge, die für die stödiometrische Bildung von Silber-Chlorid erforderlich ist, von Hause aus oder als Folge der Zusetzung enthält, wobei das Sibler gelöst wird, und daß das Silber aus der Lösung ausgefällt wird, in dem diese mit einem Metall in Kontakt gebracht wird, dessen Potential oberhalb desjenigen von Silber in der elektrochemischen Reihe liegt.

2. Verfahren nach Anspruch 1, dadurch gekennzeichnet, daß die Mischung zusätzlich Kupfer enthält.

3. Verfahren nach Anspruch 1 oder 2, dadurch gekennzeichnet, daß das Oxidierungsmittel Luft ist.

4. Verfahren nach Anspruch 1 oder 2, dadurch gekennzeichnet, daß das Oxidierungsmittel Chlor oder Hypochlorit-Ion ist.

5. Verfahren nach einem der vorstehenden Ansprüche, dadurch gekennzeichnet, daß das Metall metallisches Eisen oder Stahl ist.

6. Verfahren nach einem der Ansprüche 1 bis 5, dadurch gekennzeichnet, daß die Fällung in einer Säule erfolgt, die mehrere längliche Eisen- oder Stahlteile enthält.

7. Verfahren nach Anspruch 6, dadurch gekennzeichnet, daß die Teile im wesentlichen parallel zueinander angeordnet sind.

8. Verfahren nach Anspruch 6 oder 7, dadurch gekennzeichnet, daß die Teile vertikal orientiert sind.

9. Verfahren nach Anspruch 7, dadurch gekennzeichnet, daß die Teile Pakete aus Abfall-Stahl von Drehbänken od. dgl. größer als ca. 5 mm sind.

10. Verfahren nach Anspruch 1, dadurch gekennzeichnet, daß die Lösung des Silbers in einem Kontakt-System erfolgt und daß wenigstens ein Teil des resultierenden Silbers, das in der Lösung enthalten ist, in einem getrennten Behälter niedergeschlagen wird.

11. Verfahren nach Anspruch 10, dadurch gekennzeichnet, daß das Kontakt-System ein Gegenstrom-System ist.

12. Verfahren nach Anspruch 10 oder 11, dadurch gekennzeichnet, daß die Lösung, die aufgrund der Fällung silberfrei ist, zu der Gegenstrom - Kontact - Lösung zurückgeführt wird.

**Revendications**

1. Procédé de récupération d'argent à partir d'un minerai contenant de l'argent ou d'un concentré, dans lequel on forme un mélange de minerai ou de concentré et d'un électrolyte contenant des ions chlorure, on introduit un gaz contenant de l'oxygène dans le mélange, et on maintient le mélange à une température allant jusqu'au point d'ébullition de l'électrolyte, caractérisé en ce que l'électrolyte est un électrolyte acide, en ce qu'on ajoute au mélange un agent oxydant contentant, par lui-même ou à la suite de ladite addition, des ions chlorure en excès de ce qui est reguis pour la formation stoechiométrique de chlorure d'argent grâce à quoi l'argent passe en solution, et en ce que l'argent est précipité à partir de la solution par mise en contact de cette dernière avec un métal ayant un potentiel supérieur à celui de l'argent dans la série électrochimique.

2. Procédé selon la revendication 1, caractérisé en ce que ledit mélange contient en outre du cuivre ionique.

3. Procédé selon l'une quelconque des revendications 1 ou 2, caractérisé en ce que ledit agent oxydant est l'air.

4. Procédé selon l'une quelconque des revendications 1 ou 2, caractérisé en ce que ledit agent oxydant est l'ion chlore ou hypochlorite.

5. Procédé selon l'une quelconque des revendications précédentes, caractérisé en ce que ledit métal est le fer métallique ou l'acier.

6. Procédé selon l'une quelconque des revendications 1 à 5, caractérisé en ce que la précipitation est conduite dans une colonne contenant plusieurs pièces de fer ou d'acier allongées.

7. Procédé selon la revendication 6, caractérisé en ce que lesdites pièces sont disposées généralement parallèles l'une à l'autre.

8. Procédé selon l'une quelconque des revendications 6 ou 7, caractérisé en ce que lesdites pièces sont orientées dans une direction verticale.

9. Procédé selon la revendication 7, caractérisé en ce que lesdites pièces sont une charge de résidu d'acier provenant d'un tour ou d'autres opérations avec une taille de vide supérieure à 5 mm.

10. Procédé selon la revendication 1, caractérisé en ce que la dissolution de l'argent est conduite dans un système de mise en contact et en ce qu'au moins une partie de l'argent résultant contenu en solution est précipitée dans un récipient séparé.

11. Procédé selon la revendication 10, caractérisé en ce que le système de mise en contact est un système à contre-courant.

12. Procédé selon les revendications 10 ou 11, caractérisé en ce que la solution dépourvue d'argent résultant de la précipitation est recyclée vers ladite solution de mise en contact à contre-courant.

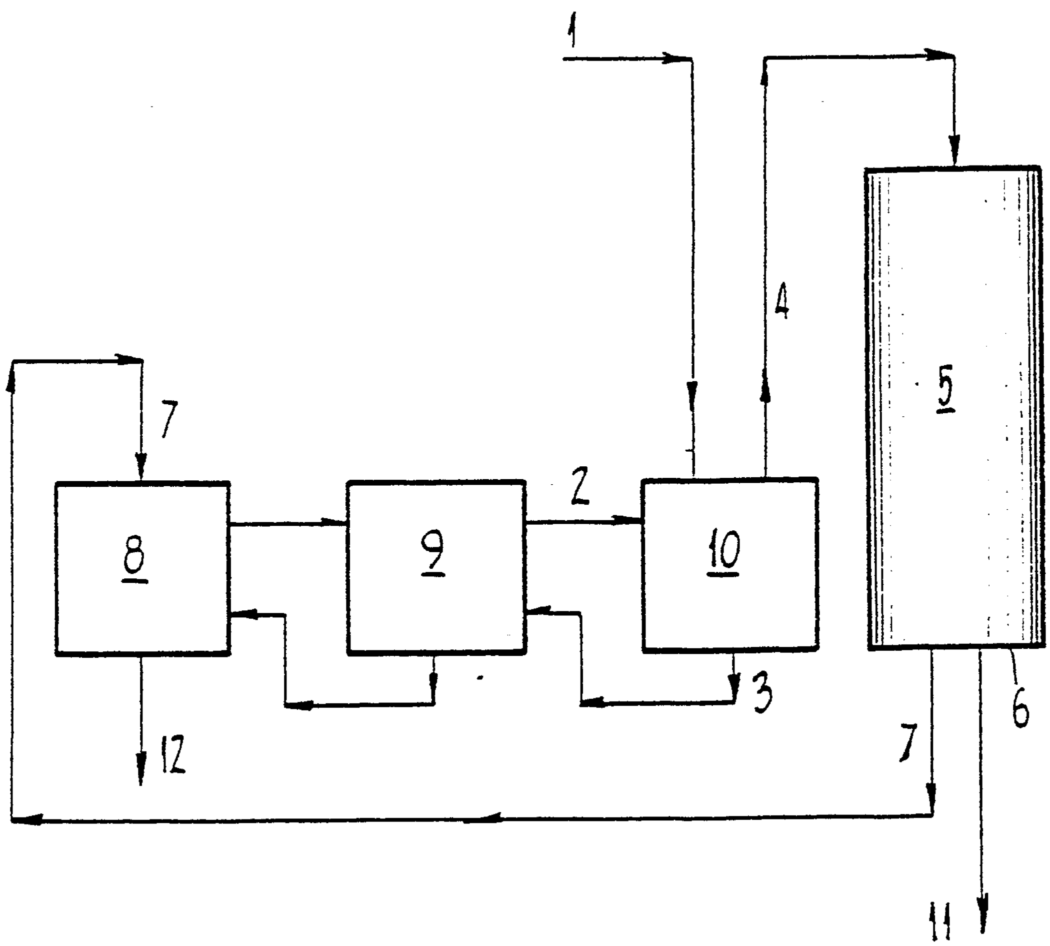
1
4
5
7
8
9
2
10
3
6
12
7
11